Europäisches Patentamt

European Patent Office

Office européen des brevets

(19)

(11) **EP 1 356 566 B1**

(12) **EUROPEAN PATENT SPECIFICATION**

(45) Date of publication and mention
of the grant of the patent:
**23.02.2005 Bulletin 2005/08**

(21) Application number: **01994965.0**

(22) Date of filing: **31.12.2001**

(51) Int Cl.⁷: **H02J 3/00**

(86) International application number:
**PCT/IT2001/000663**

(87) International publication number:
**WO 2002/058207 (25.07.2002 Gazette 2002/30)**

(54) **SYSTEM OF TRANSPORT AND DISTRIBUTION OF ENERGY TO VOLTAGE INCLUSIVE BETWEEN 600V AND 1200V**

SYSTEM ZUM TRANSPORT UND ZUR VERTEILUNG VON ENERGIE AUF SPANNUNGEN ZWISCHEN EINSCHLIESSLICH 600 V UND 1200 V

SYSTEME DE TRANSPORT ET DE DISTRIBUTION D'ENERGIE ELECTRIQUE A DES TENSIONS DE 600V A 1200V

(84) Designated Contracting States:
**AT BE CH CY DE DK ES FI FR GB GR IE IT LI LU MC NL PT SE TR**

(30) Priority: **22.01.2001 IT PZ20010001**

(43) Date of publication of application:
**29.10.2003 Bulletin 2003/44**

(73) Proprietor: **Iovene, Bruno**
**85029 Venosa (IT)**

(72) Inventor: **Iovene, Bruno**
**85029 Venosa (IT)**

(74) Representative: **Modiano, Guido, Dr.-Ing. et al**
**Modiano Gardi Patents,**
**Via Meravigli, 16**
**20123 Milano (IT)**

(56) References cited:
**FR-A- 2 257 858**

**Description**

Technical field

Object of the present invention is to realize a system of transport, distribution and/or sale of electric energy at industrial frequency at voltage inclusive between 600V and 1200V essentially constituted by normalized cables for lines with low voltage, three-phase transformers with two low voltages in delivery and circuit breakers.

State of the technique

In many areas, the principal problem of the distribution and the delivery of electric energy is to contain the voltage drop in compatible limits with the prescriptions of the electric norm and the contractual clauses. The actual state of the art foresees that the transport, the distribution, the delivery and the sale of electric energy to the customers at the voltage 400/231 V and till 110V is directly ensured by the system at medium voltage (3000÷30000V) without other intermediate passage. Opportune static machines (transformers) distributed on the territory in relationship to the density of the load, transform the electric voltage from medium voltage (which is hereby referred to as MV) to low voltage (which is hereby referred to as LV) and therefore ready to be used for the most varied uses.

It is known that the scarce quality of the electric service, especially in the areas with low density of load and in rural areas, is mainly owed to the line of medium voltage : the number of transitory interruptions , as well as good part of the holes of tension, almost exclusively depend on the extension of the MV line, more exposed to the atmospheric troubles and with a number of users, contemporarily involved by a breakdown of the service, decidedly superior to what is realized in a single LV line.

Purpose of the present invention is to propose a new level of voltage superior to the existing 400V for better make front the new demands, to contain the costs of investment for the lacing of customers of low power placed in areas with low density of load, to improve the quality of the service in the rural areas, characterized by long MV aerial lines, to reduce the times of realization of the lacing and to reduce the visual impact of the installations.

Other purpose of the present invention in accord with the preceding understanding is that to contain the extension of the MV line, that is of that MV line subtended by the single support and consequently of that subtended by a whole bar of primary box replacing with a LV line more elevated of that standard contractual to the users, this last one having a modest ray of action because of limits in the voltage drop.

Other purpose of the present invention in accord with the preceding understanding is that to allow the lacing of customers, which need increases of electric power of the supplies (which are at the limit for voltage drop) but which at the same time want to avoid to pass to the MV both for economic motives and for the simplification of the release of authorizations or permissions.

These purposes are achieved by the system of claim 1. In summary, for the transport, the distribution and the delivery of the electric energy a new level of tension is provided which is comprised between 600V and 1200V (which level is hereby referred to as $L_1V_1$), which preferably uses the LV normalized cables in use in such way to get a great economic convenience of the distribution of electric energy and with small environmental problems in substitution or placed side by side to the medium voltage lines, very more expensive and often less reliable than those with low voltage in cable.

A system of electric current supply is provided at a voltage inclusive between 600V and 1200V through the use of transformers with eventually two deliverings at the secondary side.

Description of the drawings and modes for carrying out the invention

The invention is exposed more precisely by means of examples of forms of preferred realization according to the attached drawings and furnished for only indicative and not limitative purpose in which:

- the fig. 1 schematically shows the state of the art;
- the fig. 2 schematically shows a first preferred form of realization of the present invention;
- the fig. 3 schematically shows a second form of the realization of the present invention;
- the fig. 4 schematically shows a further preferred form of realization of the present invention.
- The fig. 5 shows the comparison among the transportable power with the two levels of voltage in function of the length of the line and with the same voltage drop (5%).

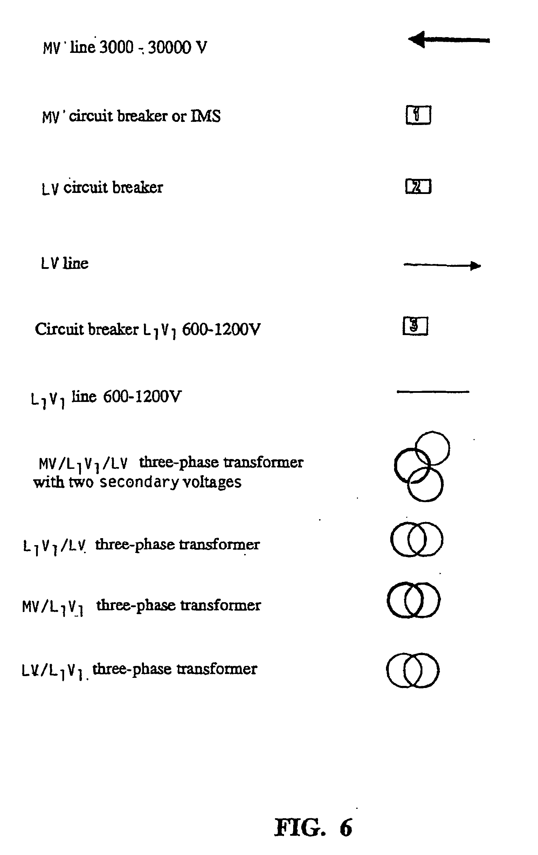

- The fig. 6 shows the nomenclature of the graphic signs.

The attached figures show the typical schemes of application of the present invention that can be different in function of the limiting factor of the voltage drop and the load to supply.

As it can be noticed by the attached drawings for resolving all the cases that are introduced in the technical practice, are necessary further that the interrupters (or circuit breakers) to be realized for the $L_1V_1$ lines and three typologies of transformers or autotransformers of suitable powers and with the following tensions:

a) Three-phase Transformers MV/$L_1V_1$/LV (nominal power 160, 250 KVA or around) with the primary at 3000÷30.000V and the secondary two voltages: $L_1V_1$ of 600÷1200V and the other LV of 400/231 V or 231/127V and till 110V.

The transformer MV/$L_1V_1$/LV finds employment for both the departure from boxes in masonry and for that from pole. In the first case is necessary the maintenance of the only MV dorsal eliminating the derivations in MV and foreseeing boxes of transformation along the said dorsal with transformations toward the 400V local and toward the 600-1200V to realize radial lines with a ray of action of the order of some kilometres according to the transported power and to the section of the cable.

In the second case is necessary the insertion of a place of transformation from pole, supplied by a derivation on the dorsal MV (whose length is inferior however in comparison to the traditional solutions) from which to develop the system to 600-1200V in function of the load to supply.

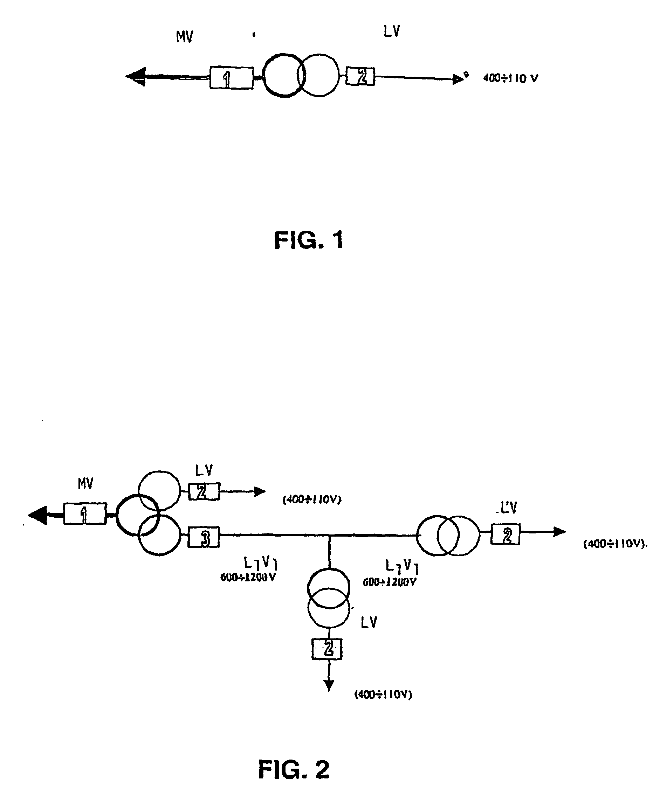

The level of voltage of 400/231V or 220/127V supplies, according to the traditional canons, the users which, medially, are distant not more than 600/700 meters from the point of transformation MV/LV (box). The second level of voltage, that is that of 600÷1200V supplies loads that, to parity of power, can be around seven more distant times of those fed to 400/231 V. The middle distances will pass so to 3000÷4000 meters in comparison to those actual of 600/700 meters (as is schematically represented in fig. 2).

It must be noticed besides that, to parity of distance, the tension of 600÷1200V can feed loads, medially, six times great of those supplied to 400V.

In the immediate proximities of the points of use, the presence of a second transformer kneels voltage of the electric energy from 600÷1200V to the value LV currently in use.

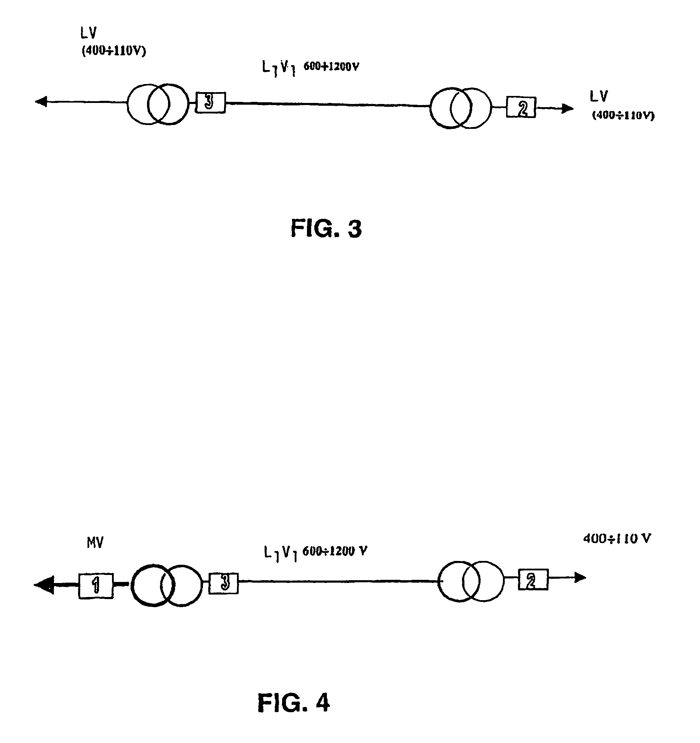

b) Three-phase Transformers MV/$L_1V_1$ but of inferior power (50, 100, 160 KVA or around) to install on pole in the case of feeding with MV direct derivation from back; these transformers provide for the voltage of 600÷1200V for supplying only loads distant from the point of transformation. In proximity of the users a lowering voltage is operated from the voltage $L_1V_1$ to that LV, as schematically visualized in the fig. 4.

c) Final Transformers $L_1V_1$/LV of small power (50KVA about) for the transformations on pole in proximity of the users; this transformer can work both to raise and to lower the tension, according to the scheme of fig. 3; the transformer $L_1V_1$/LV has a low rate of breakdown because not subject to voltages of external origin.

Remarkable is the fact that the transformers are entirely similar, for the other nominal and constructive characters, to those currently used, as well as the LV cables used by a lot of distributing societies of electric energy are already fit to be managed at the nominal tension of 600÷1200V.

Particularly the use of LV cables involves remarkable advantages:

- the introduction of the cable managed at 600÷1200V increases the flexibility of the LV lines at 400/231 V (existing or to build); these last ones can be foreseen till values of powers at the limit of their electric performances because a request of great power can be resolved simply passing the voltage of the LV cable from 400V to 600÷1200V, avoiding expensive solutions at medium voltage ;
- about 50% of the LV cable at 600+1200V can be put in work on the supports of the MV aerial lines interested by remaking;
- the LV cable managed at 600÷1200V requires small appointment for the programmed inspection, often enough that occasional ;
- the LV cable managed at 600÷1200V requires a small ordinary maintenance in comparison to the MV aerial lines ;
- the line $L_1V_1$ with covered cable has an environmental impact inferior to that of the MV in naked conductors;
- the line $L_1V_1$ in aerial cable requires small appointment to the goals of the authorizations and the layout of the project in comparison to the MV line in naked conductors;
- the LV aerial cable doesn't have bursts, possible holes of tension are negligible or enough contained;
- the LV cable managed at 600÷1200V is little or not influenced by the atmospheric discharges;
- the LV cable managed at 600÷1200V contains the current of breakdown toward earth on the MV line.

As example we quote two cables, one for the aerial laying and the other for the laying in underground, very used for the transport of electric energy in low voltage. We repeat, very important thing, these two LV cables, without additional burden, are already fit to be managed at the maximum tension of 1200V.

The two types of cable are:

1) LV aerial cable ARE4RX with conductor of phase in aluminum from 70 or 35 mm$^2$ and neutral alloy conductor from 54,6 mm$^2$ with good mechanical qualities;

2) LV cable G2OCR/R in copper for buried laying; the sections of this type of cable, to neutral concentric, embrace a wide range, from the 6 mm$^2$ till the 150 mm$^2$ and over.

To parity of every other parameter, transport capacity of a line depends on the square of its nominal tension.

Setting equal to 1 the transport capacity of the lines at 380V ($C_{0,38kV}$):

- $C_{0,38kV}$ = 1 ;
- $C_{20kV}$ = 2.770;

A line at 20 kV has a transport capacity 2.770 times superior to that at 380V. The two levels of voltage correspond to steps of powers very outdistanced; the MV lines cover a band of very ample power with the result that more than few times they are used only for a small fraction of their potentiality. The introduction of an intermediate voltage, for example of 1000V, would for instance bring the step of $C_{1kV}$ = 6,93, filling the difference among 1 and 2.770.

We would have the three steps:

- $C_{0,38kV}$ = 1 ;
- $C_{1,0kV}$ = 6,93;
- $C_{20kV}$ = 2.770;

| Chart n. 1 principal parameters of the covered cable ARE4RX | | | | | | | |
|---|---|---|---|---|---|---|---|
| Covered cable Type (n x mm$^2$) | Electric resistance (1) R ($\Omega$ /Km) | Electric Reactance X ($\Omega$ /Km) | Unitary voltage drop of phase $\Delta$V'= (Rcos $\varphi$ + Xsin $\varphi$) (V/A x Km) | | Power to the thermal limit (2) (A) | Power to the thermal limit (2) In . kW and Cos $\varphi$ = 0,8 | Power to the thermal limit (2) In kW and Cos $\varphi$ = 0,8 |
| | | | Cos$\varphi$ = 0,9 | Cos $\varphi$ = 0,8 | | Cable 380V | Cable 1000V |
| 3x70Al+1x54,8 | 0,50 | 0,10 | 0,49 | 0,46 | 191 | 100,5 | 264,3 |
| 3x35Al+1x54,8 | 0,97 | 0,11 | 0,92 | 0,84 | 123 | 64,7 | 170,2 |

(1) The conductor's resistance to the temperature at 50°C;
Temperature environment at 30°C and temperature of regime of the cable of 85°C.

The transport capacity of the LV cable has been calculated assuming a voltage drop not superior than 5% of that nominal, for every kilometer of line and for every kW of power with cos$\varphi$ = 0,8.

In the hypothesis of which above, the transport capacity of the LV aerial cable in Al. 70mm$^2$ managed at 1000V is given from: P x L = 50/($\sqrt{3}$ x 0,46 x 0,72) = 87,26 kW x km, the same cable managed at 380 V has a transport capacity of 12,57 kW x km, equal to 6,94 times smaller than that managed at 1000V.

With 5% voltage drop and cos$\varphi$ = 0,8, the LV cable G2OCR/R Cu 3x150+95C mm$^2$ managed at 1000V, has a transport capacity of 318 kW x km, able to also feed big supplies distant from the transformation point.

| Chart n. 2 Transport capacity of the BT Cable ARE4RX | | |
|---|---|---|
| Section | Voltage | Transport capacity |
| CableBTAl 70mm$^2$ | 1000V | 87,26 kW x km |
| CableBTAl 35 mm$^2$ | 1000V | 47,79 kW x km |
| CableBTAl 70 mm$^2$ | 380V | 12,57 kW x km |
| CableBTAl 35 mm$^2$ | 380V | 6,88 kW x km |

To keep track of the voltage drop inside the transformer or the autotransformer, the transport capacity of the LV cable at 1000V must adequately be decreased in comparison to the values of the table 2.

The voltage drop inside to the transformer can be calculated with the formula:

$$\Delta v\% = (v_{cc}\%)(\cos\varphi \cdot \cos\varphi_{cc} + \sin\varphi \cdot \sin\varphi_{cc}) + \frac{(v_{cc}\%)^2}{200}(\cos\varphi \cdot \sin\varphi_{cc} - \sin\varphi \cdot \cos\varphi_{cc})^2$$

$\Delta v\%$ = voltage drop inside the transformer, in percentage of that nominal ;

$v_{cc}\%$ = value percentage of the short circuit voltage of the transformer related to the current of full load ; for currents minor of the full load, the value of it is reduced in proportion;

$\cos\varphi$ = power factor of the load fed by the transformer ;

$\cos\varphi_{cc}$ = short circuit power factor of the transformer.

The transformers of the distribution medially work at about 60% of their power; for the areas with low density of load, particular cases excepted, the utilization of the transformers descended to values that go from 15 to 30% of their nominal power. The short circuit voltage of the MV/LV transformers of the distribution ($v_{cc}\%$) is around 4% of that nominal ; less than 2% for the $L_1V_1$/LV transformers and the MV/$L_1V_1$/LV transformers on MV/$L_1V_1$ side.

The power factor of the load ($\cos\varphi$) can be assumed equal to 0,8; that of short circuit ($\cos\varphi_{cc}$) is equal, approximately, to 0,2 for the transformers, and to 0,1 for the $L_1V_1$/LV transformers and the MV/ $L_1V_1$/LV transformers on MV/$L_1V_1$ side.

Example 1. Autotransformer that supplies a power equal to 30% of that of plate with $\cos\varphi$ equal to 0,8:

$$\Delta v\% = 0,3(2*(0,8*0,1+0,6*0,99)+4/200*(0,8*0,99-0,6*0,1)^2)\%=(0,40+0,003)\%$$

$$= 0,40\%$$

of that nominal. The second term of the formula of the voltage drop is, generally, negligible compared to the first one.

Example 2. Transformer that supplies a power equal to 30% of that of plate equal to 0,8:

$$\Delta v\% = 0,3(4*(0,8*0,2+0,6*0,98)+16/200*(0,8*0,98-0,6*0,2)^2)\% = (0,90 +$$

$$0,011)\%,$$

i. e. lower than 1% of that nominal.

The presence of the transformers therefore doesn't alter the thermal limit of the cable at 1000V ; while its transport capacity with voltage drop to 5%, decreases of an enough contained quantity.

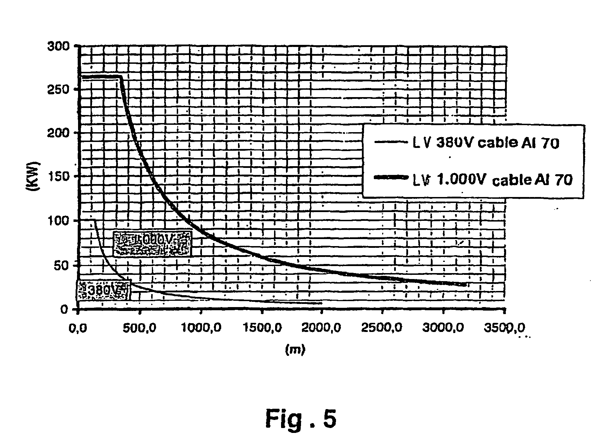

The graph of fig. 5 puts in evidence the fact that the new level of tension of 600/1200V (in the example 1000V) replaces, mainly, the medium voltage whose lines are little reliable and very more expensive than those at low voltage.

Remarkable advantages are following the adoption of the present invention; in fact the electric fittings of the distributing societies are modified radically, particularly:

a) the length of the MV aerial lines naked decreases, on average, of 30%;

b) the number of the PTP (places of transformation from pole) decreases of over 80%. The transformers with two secondary ratio MV/$L_1V_1$/LV will be installed in the boxes in masonry and on the PTP ;

c) the number of the boxes in masonry MV/LV of thirds (not of the distributing societies) decreases of 50%;

d) the number of the nodal boxes (boxes for the automatic selection of the breakdown) decreases of around 30%;

e) the length of the lines of low voltage increases of 25%. For about half of the $L_1V_1$ lines (600÷1200V) to build, the supports of the MV lines destined to be declassed to 600÷1200V can be used;

f) for every group of customers and more rarely for every customer, a $L_1V_1$/transformer or LV autotrasformer is required.

The other principal advantages are:

the adoption of the voltage at 600÷1200V allows to decrease the number of the expensive primary boxes;

the introduction of the level of voltage at 600÷1200V makes possible the sale of the electric energy at voltage of 600÷1200V with mutual advantage of the distributor and the users;

the LV cable managed at 600÷1200V therefore will especially improve the quality of the electric service in suburban and rural areas, to such a level that to get it in other way superior investments would be necessary;

in fact to the actual state in the rural and suburban areas, one of the solutions more followed by the distributing society to improve the quality of the electric service is that to transform the actual MV aerial lines, from rigid to suspended with the substitution of the conductors and the realization of a MV line to connections and nodal boxes with a remarkable economic appointment for every kilometre of MV line interested in the remaking.

Instead the present invention leaves the MV connections unchanged, while declassing to 600÷1200V the actual MV aerial derivations that transport powers of the order of 100 kW, resolving so the problem of the known technique.

The introduction of the level of tension of 600÷1200V brings advantages, not only to the distributing societies of electric energy, but also to the new customers to be laced who require a busy power around the 100/160 kW and distant from a MV/LV transformation box of around 200/600 meters.

The solution to the actual state of the technique foresees to load the users with the construction of a box in masonry or a prefabricated, complete of equipment with a MV/LV transformer of 250 kVA and eventually a second transformer of ready reserve and relative equipment; instead, the distributing society is loaded with the disconnecting and measure equipments of the electric energy and the construction of the link of MV line between the existing line and the box of the customer.

The system of transport, distribution of electric energy of the present invention, utilizing a cable or other mean of transport at 600÷1200V foresees to load the distributor with the construction of a line of low voltage at 600÷1200V of suitable section and necessary length to the requested utilization, therefore a transformer $MV/L_1V_1/LV$ of 100÷400 kVA to service also other customers, a second transformer or autotransformer $L_1V_1/LV$ of adequate power and the construction of the intake for the feeding low voltage to the final customer.

With the solution $L_1V_1$ at the voltage 600÷1200 V the user doesn't have to build the local box with relative electric equipment and to worry about their maintenance.

Said system according to the present invention offers the more wide guarantees of reliability and safety in the use, it results easily obtainable using elements, materials and equipment available and technically experimented already, therefore it is competitive from the economic point of view, besides in his conceptual simplicity it represents a notable solution in the field of the transport and the delivery of the electric energy.

From the foregoing it can be seen that the invention reaches the preceded purposes.

**Claims**

1.  System of transport and distribution of electric energy at industrial frequency comprising a medium voltage (MV) line at 3000V to 30000V, three phase medium voltage/low voltage (MV/LU) transformers and low voltage (LV) lines, **characterized in that** said three-phase transformers have a nominal power of about 160kVA or 250kVA, each three-phase transformer has a primary connected to said medium voltage (MV) line and two secondaries $(L_1V_1, LV)$,

    the first secondary (LV) of said transformer $(MV/L_1V_1/LV)$ for transforming said medium voltage (MV) to a low voltage (LV) selected from the group comprising 400/231 V, 220/127 V and 110V, so as to supply customers near the place of transformation in which said transformer $(MV/L_1V_1/LV)$ is installed;

    the second secondary $(L_1,V_1)$ of said transformer $(MV/L_1V_1/LV)$ for transforming said medium voltage (MV) to a level of voltage $(L_1V_1)$ comprised between 600V and 1200V so as to supply, via a low voltage line at said level of voltage $(L_1V_1)$, distant customers with respect to the place of transformation, final transformers or autotransformers $(L_1V_1/LV)$ being provided at a place near said distant customers for transforming said level of voltage $(L_1V_1)$ to said low voltage (LV).

2.  The system of transport and distribution of electric energy according to claim 1, **characterized in that** the voltage line at said level of voltage $(L_1V_1)$ is divided into two or more branches to supply two or more of said final transformers or autotransformers $(L_1V_1/LV)$.

3.  The system of transport and distribution of electric energy according to claims 1 or 2, **characterized in that** the low voltage lines for supplying said distant customers comprise aerial or underground low voltage (LV) cables.

## EP 1 356 566 B1

**Patentansprüche**

1. System zum Übertragen und Verteilen elektrischer Energie bei industriellen Frequenzen mit:

   einer Mittelspanung(MV)leitung für 3000 V bis 30000 V;
   einem Mittelspannungs/Niederspannungs- (MV/LV) Dreiphasentransformator; und
   Niederspannung(LV)leitungen;

   **dadurch gekennzeichnet, daß**
   die Dreiphasentransformatoren eine Nennleistung von etwa 160 kVA oder 250 kVA aufweisen, wobei jeder Dreiphasentransformator einen mit der Mittelspannungs(MV)leitung verbundenen Primärteil und zwei Sekundärteile ($L_1V_1$, LV) aufweist;
   wobei der erste Sekundärteil (LV) des Transformators (MV/$L_1V_1$/LV) zum Umwandeln der Mittelspannung (MV) auf eine Niederspannung (LV) dient, die aus 400/231 V, 220/127 V und 110V ausgewählt und Kunden in der Nähe des Transformationsortes, an dem der Transformator (MV/$L_1V_1$/LV) installiert ist, zugeführt wird;
   der zweite Sekundärteil ($L_1V_1$) des Transformators (MV/$L_1V_1$/LV) zum Umwandeln der Mittelspannung (MV) auf einen Spannungspegel ($L_1V_1$) dient, der zwischen 600 V und 1200 V beträgt, um diese Spannung ($L_1V_1$) über eine Niederspannungsleitung bezüglich des Transformationsortes entfernten Kunden zuzuführen, wobei Endtransformatoren oder Spar- bzw. Autotransformatoren ($L_1V_1$/LV) an einer Stelle in der Nähe der entfernten Kunden bereitgestellt werden, um den Spannungspegel ($L_1V_1$) auf die Niederspannung (LV) umzuwandeln.

2. System nach Anspruch 1, **dadurch gekennzeichnet, daß** die Spannungsleitung für den Spannungspegel ($L_1V_1$) in zwei oder mehr Zweige geteilt ist, um die Spannung zwei oder mehreren der Endtransformatoren oder Autotransformatoren ($L_1V_1$/LV) zuzuführen.

3. System nach Anspruch 1 oder 2, **dadurch gekennzeichnet, daß** die Niederspannungsleitungen zum Versorgen entfernter Kunden Niederspannungs-Freileitungen oder unterirdisch verlegte Niederpannungs(LV)kabel aufweisen.

**Revendications**

1. Système de transport et de distribution d'une énergie électrique à une fréquence industrielle comprenant une ligne de tension moyenne (MV) de 3000 V à 30000 V,des transformateurs triphasé de tension moyenne/de basse tension (MV/LV) et des lignes de basse tension (LV), **caractérisé en ce que** lesdits transformateurs triphasés possèdent une puissance nominale d'environ 160 kVA ou 250 kVA, chaque transformateur triphasé possédant un primaire relié à ladite ligne de tension moyenne (MV) et deux secondaires ($L_1V_1$, LV),
   le premier secondaire (LV) dudit transformateur (MV/$L_1V_1$/LV) étant destiné à transformer ladite tension moyenne (MV) en une basse tension (LV) choisie parmi le groupe comprenant 400/231 V, 220/127 V et 110 V, de manière à alimenter des clients proches de l'endroit de transformation auquel ledit transformateur (MV/$L_1V_1$/LV) est installé ;
   le second secondaire ($L_1V_1$) dudit transformateur (MV/$L_1V_1$/LV) étant destiné à transformer ladite tension moyenne (MV) en un niveau de tension ($L_1V_1$) compris entre 600 V et 1200 V de manière à alimenter, via une ligne de basse tension possédant ledit niveau de tension ($L_1V_1$), des clients éloignés par rapport à l'endroit de transformation, des transformateurs finaux ou autotransformateurs ($L_1V_1$/LV) étant prévus à un endroit proche desdits clients éloignés afin de transformer ledit niveau de tension ($L_1V_1$) en ladite basse tension (LV) .

2. Système de transport et de distribution d'énergie électrique selon la revendication 1, **caractérisé en ce que** la ligne de tension possédant ledit niveau de tension ($L_1V_1$) est divisée en deux branches ou plus afin d'alimenter deux desdits transformateurs finaux ou autotransformateurs ($L_1V_1$/LV) ou plus.

3. Système de transport et de distribution d'une énergie électrique selon les revendications 1 ou 2, **caractérisé en ce que** les lignes de basse tension destinées à alimenter lesdits clients éloignés comprennent des câbles de basse tension (LV) aériens ou souterrains.

MV · LV

1 2 400÷110 V

**FIG. 1**

LV
2

MV (400÷110V)

1 3

$L_1V_1$
600÷1200V

$L_1V_1$
600÷1200V

LV
2

(400÷110V).

LV
2

(400÷110V)

**FIG. 2**

**FIG. 3**

**FIG. 4**

**Fig . 5**

MV line 3000 - 30000 V

MV circuit breaker or IMS

LV circuit breaker

LV line

Circuit breaker $L_1V_1$ 600-1200V

$L_1V_1$ line 600-1200V

MV/$L_1V_1$/LV  three-phase transformer
with two secondary voltages

$L_1V_1$/LV  three-phase transformer

MV/$L_1V_1$  three-phase transformer

LV/$L_1V_1$  three-phase transformer

# FIG. 6